# EUROPÄISCHE PATENTSCHRIFT

(11) **EP 1 956 149 B1**
(45) Veröffentlichungstag und Bekanntmachung des Hinweises auf die Patenterteilung: **13.10.2010**
(21) Anmeldenummer: 07002616.6
(22) Anmeldetag: 07.02.2007
(51) Int. Cl.: E03C 1/02, F16L 33/34

(54) **Schlauch, inbesondere Brauseschlauch, mit Umspritzung**
Hose, in particular shower hose, with injection-moulded coating
Tuyau, en particulier tuyau d'arrosage, avec enrobage par moulage par injection

(43) Veröffentlichungstag der Anmeldung: 13.08.2008
(73) Patentinhaber: Ramspott GmbH & Co. KG, 59909 Bestwig (DE)
(72) Erfinder: Ramspott, Heiner, 59909 Bestwig (DE)
(74) Vertreter: Graefe, Jörg

(56) Entgegenhaltungen:
- DE-U1- 20 211 150
- DE-U1- 20 212 169
- DE-U1- 29 506 835
- US-A- 3 467 764
- US-A- 6 106 027

## Beschreibung

Die vorliegende Erfindung betrifft einen Schlauch, insbesondere einen Brauseschlauch mit einem Innenschlauch, einer Metallspirale, einer Ummantelung, einem Anschlussstück und einer Umspritzung, wobei das Anschlussstück in den Innenschlauch eingepresst ist, der Innenschlauch in der Metallspirale angeordnet ist, die Metallspirale mit der Ummantelung versehen ist und die Umspritzung an die Ummantelung angespritzt ist

Ein Schlauch der eingangsgenannten Art ist aus der Gebrauchsmusterschrift mit der Veröffentlichungsnummer DE 202 11 150 U1 bekannt. Das Anschlussteil des Schlauchs ist aus einem Kunststoff hergestellt und mit dem Kunststoffinnenschlauch verschweißt. Außerdem übergreift das Anschlussstück die äußere Kunststoffummantelung der Metallspirale. Die Umspritzung und das Anschlussstück sind einstückig ausgeführt, das heißt, das Anschlussstück ist als Umspritzung des Innenschlauchs beziehungsweise der Ummantelung vorgesehen.

Ein derartiges angespritztes Anschlussstück ist vorteilhaft bei der Herstellung des Schlauches. Außerdem greifen keine den Schlauch verengenden Teile in das Innere des Innenschlauchs ein. Zu dem bietet die Umspritzung einen Schutz gegen das Eindringen von Feuchtigkeit in den Zwischenraum zwischen dem Innenschlauch und der Metallspirale.

Ein Anspritzen des Anschlussstücks an den Innenschlauch ist nur möglich, wenn das Kunststoffmaterial des Innenschlauchs und des Anschlussstücks auf einander abgestimmt sind. Dies hat zur Folge, dass man bei der Fertigung des Schlauchs besonders auf die Materialwahl achten muss. Man kann daher u. U. für das Anschlussstück bzw. für den Innenschlauch nicht immer das für seine Funktion geeignete Material wählen, sondern muss aufgrund der erforderlichen Kombinierbarkeit mit dem andern Teil Kompromisse eingehen.

Ein weiterer Nachteil ist die geringere Zugfestigkeit eines solchen Schlauches. Zugkräfte, die über das Anschlussstück in den Schlauch eingeleitet werden, werden über den in der Regel nicht auf Zugfestigkeit ausgelegten Innenschlauch übertragen. Dieses kann zu Schäden an dem Innenschlauch führen.

Aus der Patentschrift US 3,467,764 ist ein Schlauch bekannt, der ebenfalls eine Umspritzung aufweist. Diese Umspritzung liegt an der Ummantelung der Metallspirale an und bildet eine Außenhaut, die sich über die gesamte Läge des Schlauches erstreckt. Die Umspritzung ist mit dem Innenschlauch verbunden. Auch dieser Schlauch hat den Nachteil der geringeren Zugfestigkeit eines solchen Schlauches. Zugkräfte, die über das Anschlussstück in den Schlauch eingeleitet werden, können ein Herausrutschen des Anschlussstücks aus dem Schlauch bewirken.

Vor dem Hintergrund des Standes der Technik liegt der Erfindung die Aufgabe zugrunde einen Schlauch der eingangs genannten Art so fortzubilden, dass zum Einen eine hinreichende Zugfestigkeit gewährleistet und zum Anderen eine freiere Kombination von Kunststoffen möglich ist.

Diese Aufgabe wird erfindungsgemäß dadurch gelöst, dass der Schlauch eine Hülse aufweist und dass die Umspritzung an der Hülse, diese zumindest teilweise umgreifend, anliegt. Die Hülse umgibt den Innenschlauch (2) im Endbereich, in welchem das Anschlussstück (5) eingepresst ist. Der Innenschlauch kann so in die Hülse eingezogen sein, dass der Innenschlauch zwischen dem in den Innenschlauch hineinragenden Teil des Anschlussstückes und der Hülse eingepresst ist. Die Hülse ist dazu vorteilhaft vor dem Einziehen des Schlauches in die Metallspirale eingebracht und mit dieser formschlüssig verbunden. Diese Art der Verbindung hat sich in der Vergangenheit als zuverlässig und hinreichend auszugsfest erwiesen. Durch die Umspritzung der Ummantelung, ist ferner ein Eindringen von Feuchtigkeit in den Zwischenraum zwischen der Metallspirale und der Ummantelung verhindert.

Gemäß der Erfindung kann die Ummantelung aus einem Kunststoff hergestellt sein. Dieses ist insbesondere dann sinnvoll, wenn eine stoffliche Verbindung zwischen der Ummantelung und der Umspritzung hergestellt werden soll.

Die Hülse, welche den Innenschlauch umgreift, kann aus Metall oder Kunststoff hergestellt sein. Es ist vorteilhaft wenn die Hülse aus Kunststoff hergestellt ist, weil dann eine stoffliche Verbindung zwischen der Umspritzung und der Hülse erreicht werden kann, die ein Eindringen von Feuchtigkeit an dieser Stelle in den Zwischenraum zwischen der Metallspirale und dem Innenschlauch verhindert.

Die Hülse kann ein Außengewinde aufweisen, mit welchem sie in Gänge der Metallspirale eingeschraubt ist, um feste Bindung zwischen der Metallspirale und der Hülse zu erreichen. Eine solche Schraubhülse kann sowohl aus Kunststoff als auch aus Metall hergestellt sein.

Vorteilhaft hat die Hülse einen Kragen, der von einer Überwurfmutter übergriffen werden kann. Dieser Kragen liegt vorteilhaft an einem Kragen des Anschlussstücks an.

Gemäß der Erfindung kann die Umspritzung die Metallspirale und/oder die Ummantelung hintergreifen, um einen festen Sitz der Umspritzung insbesondere bei fehlender stofflicher Verbindung mit der Ummantelung oder der Hülse zu erreichen.

Die Umspritzung kann auf der Innenseite Wülste aufweisen, welche dichtend an der Hülse anliegen können.

Der Schlauch kann eine weitere Hülse aufweisen, welche vorteilhaft die Umspritzung umgreift. Diese weitere Hülse kann aus Metall hergestellt sein. Eine derartige weitere Metallhülse kann einen optisch höherwertigen Eindruck des Schlauches vermitteln.

Das Anschlussstück kann eine Nut aufweisen, in welche die Umspritzung eingreift. Die weitere Hülse umgreift dann vorteilhaft das in die Nut eingreifende Material der Umspritzung, um ggf. ein Herausfließen des Materials der Umspritzung aus der Nute zu verhindern.

Der Innenschlauch kann sowohl die Metallspirale als auch die Ummantelung der Metallspirale überragen.

Ausführungsbeispiele für erfindungsgemäße Brauseschläuche und ein weiterer nicht erfindungsgemäßer Brauseschlauch sind anhand der Zeichnungen näher erläutert.

Es zeigt:
- Fig. 1: Einen Längsschnitt durch das Ende eines ersten Schlauches
- Fig. 2: Einen Längsschnitt durch das Ende eines zweiten Schlauches,
- Fig. 3: einen Längsschnitt durch das Ende eines dritten Schlauches
- Fig. 4: einen Längsschnitt durch das Ende eines vierten Schlauches und
- Fig. 5: einen Längsschnitt durch das Ende eines fünften, nicht erfindungsgemäßen Schlauches.

Bevor zu den in den Figuren dargestellten Schläuchen 1 die Unterschiede erläutert werden, werden zunächst die Gemeinsamkeiten der Schläuche 1 erläutert.

Allen Schläuchen 1 ist gemeinsam, dass sie dreilagig aufgebaut sind. Sie weisen einen Innenschlauch 2 auf, der in einer Metallspirale 3 lose eingezogen ist. Die Metallspirale 3 ist mit einer Ummantelung 4 umgeben. Die Ummantelung 4 dringt teilweise in die Rillen oder Gänge der Spirale ein.

An zumindest einem Ende des Schlauches weist der Schlauch 1 jeweils ein Anschlussstück 5 auf. Die Anschlussstücke 5 sind in Form von Einpressnippeln ausgeführt, die in dem Innenschlauch 2 eingepresst sind. Tannenbaumstrukturen dringen dabei von der Innenseite in die innere Oberfläche des Innenschlauches 2 ein. In dem Endbereich, in welchen die Anschlussstücke 5 eingepresst sind, ist der Innenschlauch von einer Hülse 7 umgeben. Zwischen dem Innenschlauch 2, der Hülse 7 und dem Anschlussstück 5 ist eine Pressverbindung hergestellt. Damit ist eine auszugsichere Befestigung des Anschlussstücks an dem Innenschlauch gewährleistet.

Der Innenschlauch 2 überragt an den Enden die Metallspirale 3 und die Ummantelung 4 geringfügig. In dem die Metallspirale 3 und die Ummantelung 4 überragenden Bereich ist auf der Außenseite des Innenschlauchs beziehungsweise der in diesem Bereich den Innenschlauch umgebenden Hülse 7 eine Umspritzung 6 vorgesehen. Diese Umspritzung 6 umgreift in diesem Bereich die Hülse 7 und umgreift außerdem den Endbereich der Metallspirale 3 und der Ummantelung 4. Die Umspritzung geht eine stoffliche Verbindung mit der Ummantelung 4 ein.

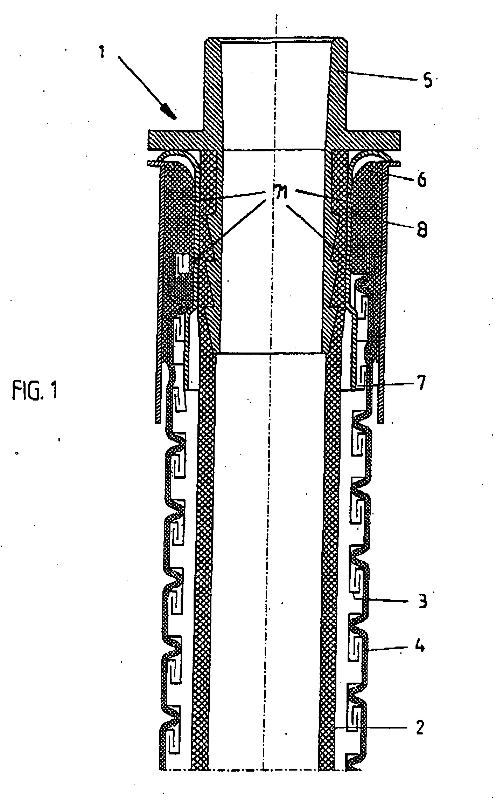

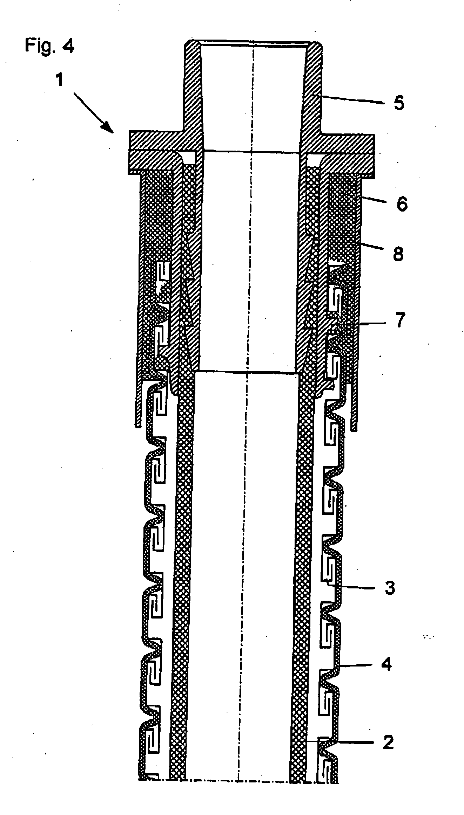

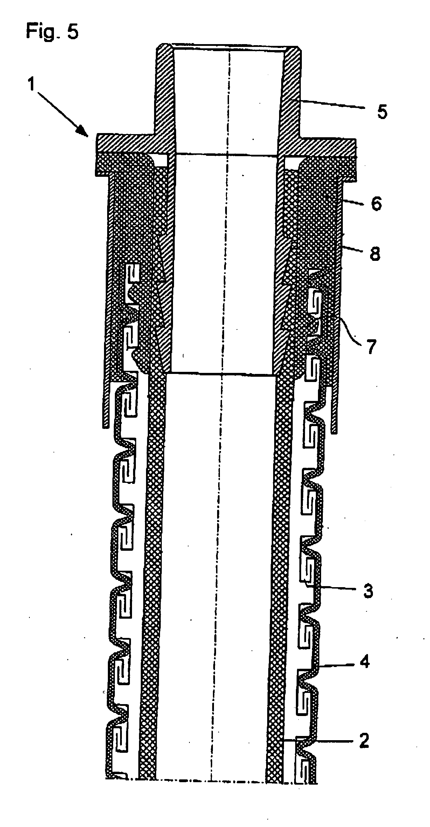

Das Ende des Innenschlauches 2 stößt in den Ausführungsbeispielen der Fig. 1 bis 3 an einen umlaufenden Bund oder Kragen des Anschlussstückes 5 an. Bei den Ausführungsbeispielen der Figuren 4 und 5 ist das Ende des Innenschlauches beabstandet von dem Bund bzw. Kragen. Auch ein Kragen der Hülse 7 liegt an dem Bund bzw. Kragen des Anschlussstückes 5 an.

Die Hülse 7 des ersten Schlauchs ist aus Metall hergestellt. Die Umspritzung 6 weist auf der Innenseite zwei umlaufende Wülste auf, an denen die Hülse 7 mit Bereichen 71 dichtend anliegen, so dass keine Feuchtigkeit in den Raum zwischen der Metallspirale 3 und dem Innenschlauch 2 eindringen kann. Die Umspritzung 6 hintergreift ferner die Ummantelung 4 und die Metallspirale 3. Dadurch ist ein fester Sitz der Umspritzung an dem Endbereich des Schlauches gewährleistet.

Zur Herstellung des Schlauch 1 gemäß Figur 1 wird zunächst die Metallspirale 3 mit der Ummantelung 4 versehen. Anschließend wird die Umspritzung 6 angeformt. Dann wird die Metallhülse 7 eingesteckt und durch Aufweiten formschlüssig mit dem Gebilde aus Metallspirale 3, Ummantelung 4 und Umspritzung 6 formschlüssig verbunden. Im nächsten Schritt wird der Innenschlauch 2 in die Metallspirale 3 eingezogen und das Anschlussstück 5 eingepresst. Zum Schluss wird die weitere Hülse 8 über die Umspritzung 6 gezogen.

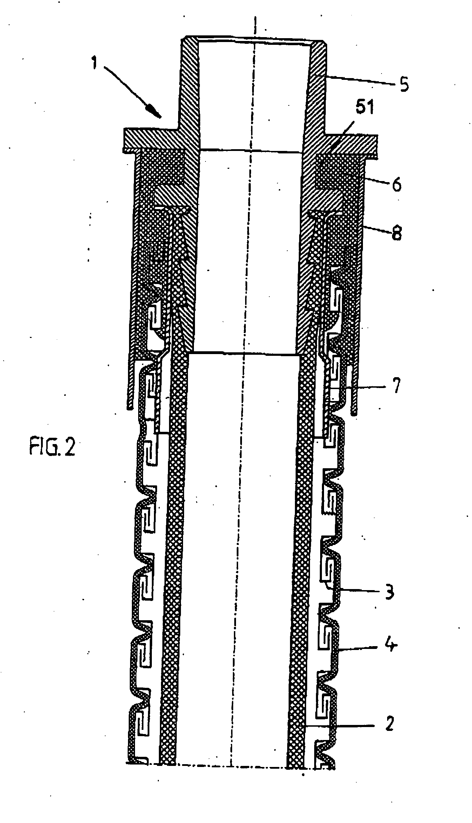

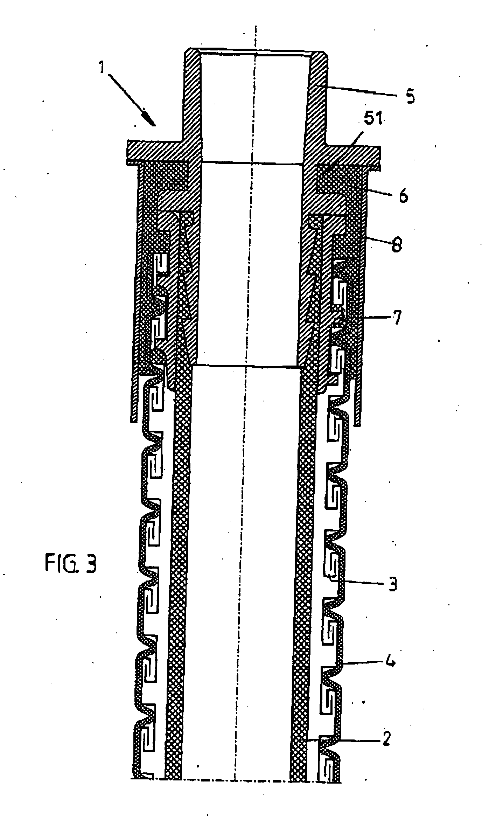

Eine weitere Hülse 8, die auch bei den übrigen Schläuchen gemäß der Figuren 2 und 3 vorgesehen ist, schließt die Ummantelung 6 im Außenbereich ab.

Der zweite Schlauch und der dritte Schlauch sind so ausgestaltet, dass das Anschlussstück einen weiteren Kragen aufweist. Zwischen diesem weiteren Kragen und dem ersten Kragen ist eine Nut ausgebildet, in welche die Umspritzung 6 eingreift. Die Umspritzung 6 geht damit eine formschlüssige und vorteilhaft auch eine stoffliche Verbindung mit dem Anschlussstück 5 ein. Die weitere Hülse 8 übergreift die Nut des Anschlussstücks 5, um eine Herausrutschen der in die Nut eingreifenden Umspritzung aus der Nut zu verhindern.

Während bei dem zweiten Schlauch gemäß Figur 2 die Hülse 7, die zur festen Verbindung des Anschlussstückes 5 mit dem Innenschlauch 2 dient, wie bei dem ersten Schlauch gemäß Figur 1 aus Metall hergestellt ist, ist bei dem dritten Schlauch gemäß Figur 3 die Hülse 7 aus Kunststoff hergestellt. Diese Kunststoffhülse 7 weist auf der Außenseite eine Gewindestruktur auf, welche die gleiche Steigung hat wie die Metallspirale 3 und in innenseitige Gänge der Metallspirale 3 eingreift. Auch die Kunststoffhülse 7 ist so ausgebildet, dass sie vorteilhaft eine stoffliche Verbindung mit der Umspritzung 6 eingeht.

Der in Figur 4 dargestellt vierte Schlauch 1 unterscheidet sich von dem ersten Schlauch gemäß Figur 1 im Wesentlichen dadurch, dass anstelle der Hülse 7 aus Metall eine Hülse 7 aus Kunststoff vorgesehen ist. Diese Hülse 7 weist ebenfalls - wie die Hülse 7 des dritten Schlauchs - ein Außengewinde auf, welches in die Metallspirale 3 eingeschraubt ist.

Beim fünften Schlauch gemäß Figur 5 ist dagegen die Hülse 7 und die Umspritzung 6 einstückig ausgeführt, d. h. die Hülse 7 und die Umspritzung 6 sind in einem Arbeitsgang an die Metallspirale 3 und die Ummantelung 4 angespritzt worden.

## Patentansprüche

1. Schlauch (1), insbesondere Brauseschlauch, mit einem Innenschlauch (2), einer Metallspirale (3), einer Ummantelung (4), einem Anschlussstück (5) und einer Umspritzung (6), wobei
- das Anschlussstück (5) in den Innenschlauch (2) eingepresst ist,
- der Innenschlauch (2) in der Metallspirale (3) angeordnet ist,
- die Metallspirale (3) mit der Ummantelung (4) versehen ist und
- die Umspritzung (6) an die Ummantelung (4) angespritzt ist
**dadurch gekennzeichnet,**
- **dass** der Schlauch (1) eine Hülse (7) aufweist, wobei die Hülse (7) den Innenschlauch (2) im Endbereich, in welchem das Anschlussstück (5) eingepresst ist, umgibt und
- **dass** die Umspritzung (6) an der Hülse (7), diese zumindest teilweise umgreifend, anliegt.

2. Schlauch (1) nach Anspruch 1, **dadurch gekennzeichnet, dass** die Ummantelung (4) aus Kunststoff besteht.

3. Schlauch (1) nach Anspruch 2, **dadurch gekennzeichnet, dass** die Ummantelung (4) stofflich mit der Umspritzung (6) verbunden ist.

4. Schlauch (1) nach einem der Ansprüche 1 bis 3, **dadurch gekennzeichnet, dass** die Hülse (7) aus Metall besteht.

5. Schlauch (1) nach einem der Ansprüche 1 bis 3, **dadurch gekennzeichnet, dass** die Hülse (7) aus Kunststoff besteht.

6. Schlauch (1) nach Anspruch 5, **dadurch gekennzeichnet, dass** die Hülse (7) stofflich mit der Umspritzung (6) verbunden ist.

7. Schlauch (1) nach einem der Ansprüche 1 bis 6, **dadurch gekennzeichnet, dass** die Hülse (7) ein Außengewinde hat, mit welchem sie in Gänge der Metallspirale (3) eingeschraubt ist.

8. Schlauch (1) nach einem der Ansprüche 1 bis 7, **dadurch gekennzeichnet, dass** die Umspritzung (6) die Metallspirale (3) und/oder die Ummantelung (4) hintergreift.

9. Schlauch (1) nach einem der Ansprüche 1 bis 8, **dadurch gekennzeichnet, dass** die Umspritzung (6) innenseitig Wülste (71) aufweist.

10. Schlauch (1) nach Anspruch 9, **dadurch gekennzeichnet, dass** die Wülste (71) der Umspritzung (6) an der Außenfläche der Hülse (7) dichtend anliegen.

11. Schlauch (1) nach einem der Ansprüche 1 bis 10, **dadurch gekennzeichnet, dass** das Anschlussstück (5) eine oder mehrere Nuten (51) aufweist.

12. Schlauch (1) nach Anspruch 11, **dadurch gekennzeichnet, dass** die Umspritzung (6) in die Nut (51) des Anschlussstücks (5) eingreift.

13. Schlauch (1) nach einem der Ansprüche 1 bis 12, **dadurch gekennzeichnet, dass** der Schlauch eine weitere Hülse (8) aufweist.

14. Schlauch (1) nach einem der Ansprüche 1 bis 13, **dadurch gekennzeichnet, dass** der Innenschlauch (2) die Metallspirale (3) und/oder die Ummantelung (4) überragt.

15. Schlauch (1) nach einem der Ansprüche 1 bis 14, **dadurch gekennzeichnet, dass** ein Kragen der Hülse (7) an einem Bund oder Kragen des Anschlussstücks (5) anliegt.

## Claims

1. Hose (1), in particular shower hose, having an inner hose (2), a metal coil (3), a sheathing (4), a connection piece (5) and an encapsulation (6), wherein
- the connection piece (5) is pressed into the inner hose (2),
- the inner hose (2) is arranged in the metal coil (3),
- the metal coil (3) is provided with the sheathing (4), and
- the encapsulation (6) is injection-moulded onto the sheathing (4),
**characterized**
- **in that** the hose (1) has a sleeve (7), wherein the sleeve (7) surrounds the inner hose (2) in the end region in which the connection piece (5) is pressed in, and
- **in that** the encapsulation (6) bears against the sleeve (7), engaging at least partially around the latter.

2. Hose (1) according to Claim 1, **characterized in that** the sheathing (4) consists of plastics material.

3. Hose (1) according to Claim 2, **characterized in that** the sheathing (4) is materially bonded to the encapsulation (6).

4. Hose (1) according to one of Claims 1 to 3, **characterized in that** the sleeve (7) consists of metal.

5. Hose (1) according to one of Claims 1 to 3, **characterized in that** the sleeve (7) consists of plastics material.

6. Hose (1) according to Claim 5, **characterized in that** the hose (7) is materially bonded to the encapsulation (6).

7. Hose (1) according to one of Claims 1 to 6, **characterized in that** the sleeve (7) has an external thread, by means of which it is screwed into turns of the metal coil (3).

8. Hose (1) according to one of Claims 1 to 7, **characterized in that** the encapsulation (6) engages behind the metal coil (3) and/or the sheathing (4).

9. Hose (1) according to one of Claims 1 to 8, **characterized in that** the encapsulation (6) has beads (71) on the inside.

10. Hose (1) according to Claim 9, **characterized in that** the beads (71) of the encapsulation (6) bear in a sealing manner against the external surface of the sleeve (7).

11. Hose (1) according to one of Claims 1 to 10, **characterized in that** the connection piece (5) has one or more grooves (51).

12. Hose (1) according to Claim 11, **characterized in that** the encapsulation (6) engages in the groove (51) of the connection piece (5).

13. Hose (1) according to one of Claims 1 to 12, **characterized in that** the hose has a further sleeve (8).

14. Hose (1) according to one of Claims 1 to 13, **characterized in that** the inner hose (2) protrudes beyond the metal coil (3) and/or the sheathing (4).

15. Hose (1) according to one of Claims 1 to 14, **characterized in that** a collar of the sleeve (7) bears against a shoulder or collar of the connection piece (5).

## Revendications

1. Tuyau (1), en particulier tuyau d'arrosage, avec un tuyau intérieur (2), une spirale métallique (3), une gaine (4), une pièce de raccord (5) et un enrobage (6),
- la pièce de raccord (5) étant sertie dans le tuyau intérieur (2),
- le tuyau intérieur (2) étant disposé dans la spirale métallique (3),
- la spirale métallique (3) étant munie de la gaine (4), et
- l'enrobage (6) étant formé par moulage par injection sur la gaine (4),
**caractérisé en ce que**
- le tuyau (1) comprend un manchon (7), le manchon (7) entourant le tuyau intérieur (2) dans la région d'extrémité dans laquelle la pièce de raccord (5) est sertie, et
- l'enrobage (6) est appliqué sur le manchon (7) en entourant celui-ci au moins partiellement.

2. Tuyau (1) selon la revendication 1, **caractérisé en ce que** la gaine (4) est composé de matière plastique.

3. Tuyau (1) selon la revendication 2, **caractérisé en ce que** la gaine (4) est reliée matériellement à l'enrobage (6).

4. Tuyau (1) selon l'une quelconque des revendications 1 à 3, **caractérisé en ce que** le manchon (7) est composé de métal.

5. Tuyau (1) selon l'une quelconque des revendications 1 à 3, **caractérisé en ce que** le manchon (7) est composé de matière plastique.

6. Tuyau (1) selon la revendication 5, **caractérisé en ce que** le manchon (7) est matériellement relié à l'enrobage (6).

7. Tuyau (1) selon l'une quelconque des revendications 1 à 6, **caractérisé en ce que** le manchon (7) présente un filet extérieur, avec lequel il est vissé dans les filets de la spirale métallique (3).

8. Tuyau (1) selon l'une quelconque des revendications 1 à 7, **caractérisé en ce que** l'enrobage (6) s'accroche par l'arrière à la spirale métallique (3) et/ou à la gaine (4).

9. Tuyau (1) selon l'une quelconque des revendications 1 à 8, **caractérisé en ce que** l'enrobage (6) présente intérieurement des bourrelets (71).

10. Tuyau (1) selon la revendication 9, **caractérisé en ce que** les bourrelets (71) de l'enrobage (6) s'appliquent de façon étanche sur la surface extérieure du manchon (7).

11. Tuyau (1) selon l'une quelconque des revendications 1 à 10, **caractérisé en ce que** la pièce de raccord (5) présente une ou plusieurs rainures (51).

12. Tuyau (1) selon la revendication 11, **caractérisé en ce que** l'enrobage (6) s'engage dans la rainure (51) de la pièce de raccord (5).

13. Tuyau (1) selon l'une quelconque des revendications 1 à 12, **caractérisé en ce que** le tuyau comporte un autre manchon (8).

14. Tuyau (1) selon l'une quelconque des revendications 1 à 13, **caractérisé en ce que** le tuyau intérieur (2) dépasse la spirale métallique (3) et/ou la gaine (4).

15. Tuyau (1) selon l'une quelconque des revendications 1 à 14, **caractérisé en ce qu'**un collet du manchon (7) s'applique sur un rebord ou un collet de la pièce de raccord (5).
